# EUROPÄISCHE PATENTANMELDUNG

(11) **EP 2 251 753 A2**
(43) Veröffentlichungstag der Anmeldung: **17.11.2010**
(21) Anmeldenummer: 10075192.4
(22) Anmeldetag: 11.05.2010
(51) Int. Cl.: G05B 19/042

(54) **Vorrichtung und Verfahren zum Programmieren mindestens einer Steuereinheit**

(30) Priorität: 15.05.2009 DE 102009022021
(71) Anmelder: Hella KGaA Hueck & Co., 59552 Lippstadt (DE)
(72) Erfinder: Talmi, Kay, 10585 Berlin (DE); Hoffmeier, Matthias, 13465 Berlin (DE)
(74) Vertreter: Pfenning, Meinig & Partner GbR

(57) **Zusammenfassung**

Die vorliegende Erfindung betrifft eine Vorrichtung zum Programmieren mindestens einer Steuereinheit (1, 2), wobei die Vorrichtung neben der mindestens einen Steuereinheit (1, 2) eine Erfassungseinheit (5) zum Erfassen von Datensätzen aufweist und wobei die Vorrichtung eingerichtet ist zum Programmieren der Steuereinheit in Abhängigkeit von den erfassten Datensätzen, wobei
- die Erfassungseinheit durch eine Kamera (5) zum Erzeugen von Bilddaten aus einem erfassten Bild gegeben ist,
- die Vorrichtung eine zum Datenaustausch mit der Kamera (5) verbundene Recheneinheit (3) aufweist und eingerichtet ist zum Übertragen von Bilddaten mindestens eines von der Kamera (5) erfassten Bildes auf die Recheneinheit (3),
- die Recheneinheit (3) eingerichtet ist zum Erfassen der Bilddaten mindestens eines von der Kamera (5) erfassten Bildes und zum Erkennen von in den erfassten Bilddaten enthaltenen, zu Datenbildern (9) gehörigen Bilddaten, wobei die Datenbilder (9) die Datensätze in kodierter Form enthalten, und zum Wiederherstellen der Datensätze aus den Bilddaten der Datenbilder (9) gemäß einer Dekodierungsvorschrift, und
- die Vorrichtung eingerichtet ist zum Übertragen der Datensätze von der Recheneinheit (3) auf die Steuereinheit (1, 2) zu deren Programmierung.

Die Erfindung betrifft ferner ein entsprechendes Verfahren.

## Beschreibung

Die Erfindung betrifft eine Vorrichtung zum Programmieren mindestens einer Steuereinheit nach dem Oberbegriff des Hauptanspruchs sowie ein entsprechendes Verfahren.

Moderne Fahrzeuge sind mit einer Vielzahl programmierbarer Steuereinheiten ausgestattet. Durch diese Steuereinheiten werden hochkomplexe Steueraufgaben übernommen wie etwa im Motor-, Brems- oder Beleuchtungssystem eines Fahrzeugs. Dazu werden Messdaten verschiedener Sensoren, wie beispielsweise Temperaturfühler, Umdrehungszahlmesser oder Helligkeitssensoren, an die Steuereinheiten übermittelt und dort in der Regel durch spezielle Steuerprogramme ausgewertet. Diese Steuerprogramme leiten aus den Messdaten Informationen oder Signale ab, welche zur Verarbeitung an Aktuatoren, etwa im Motor- oder Beleuchtungssystem des Fahrzeugs, weitergeleitet werden.

Je nach Fahrzeugmodell unterscheiden sich die Steueraufgaben aufgrund unterschiedlicher Fahrzeugmerkmale. Daher werden auf den Steuereinheiten unterschiedlicher Fahrzeugmodelle häufig auch unterschiedliche Steuerprogramme installiert. Die Programmierung der Steuereinheiten wird in der Regel über eine Programmierschnittstelle durchgeführt, über die Datensätze übertragen werden, gemäß denen die Programmierung der Steuereinheiten durchgeführt wird. Die Datensätze können dabei beispielsweise einzelne Teile eines Steuerprogramms oder vollständige Steuerprogramme beinhalten.

Die Programmierschnittstelle ist in der Regel durch einen Stecker gegeben, der sich meistens im Fahrerraum des Fahrzeugs in der Nähe des Lenkrads befindet. Dieser Stecker wird oft auch zur Online Diagnose verwendet, bei der Fahrzeugdaten ausgelesen werden können, etwa bei Reparatur- oder Wartungsprozessen.

In modernen Fahrzeugen kommen immer häufiger auf Kamerasystemen basierende Fahrerassistenzsysteme zum Einsatz, wobei durch eine Kamera beispielsweise die vordere Fahrzeugumgebung erfasst wird. Die von der Kamera erzeugten Bilddaten werden auf eine Recheneinheit des Fahrerassistenzsystems übertragen. Auf der Recheneinheit des Fahrerassistenzsystems sind zur Auswertung dieser Bilddaten Bildverarbeitungsprogramme installiert. Mit diesen Bildverarbeitungsprogrammen werden aus den Bilddaten Informationen über die Umgebung gewonnen. Insbesondere können die Bildverarbeitungsprogramme auch Bilderkennungsfunktionen beinhalten, zum Beispiel zur kamerabasierten Verkehrszeichenerkennung. Die gewonnenen Informationen können dem Fahrer über Anzeigesysteme im Fahrerraum mitgeteilt werden, um ihn während der Fahrt beim Steuern des Fahrzeugs zu unterstützen. Dazu beinhaltet das Fahrerassistenzsystem selbst eine Steuereinheit zum Steuern dieser Anzeigesysteme. Dabei kann die Steuereinheit in die Recheneinheit integriert sein.

In Fahrerassistenzsystemen integrierte Steuereinheiten werden vermehrt auch zur automatischen Steuerung von Prozessen in Fahrzeugen eingerichtet. Beispielsweise kann durch ein geeignet eingerichtetes Fahrerassistenzsystem erkannt werden, dass ein vorausfahrendes Fahrzeug abbremst. Unter vorher festgelegten Bedingungen kann das Fahrerassistenzsystem dann beispielsweise das Bremslicht des eigenen Fahrzeugs aktivieren, um auf diese Weise die Gefahr einer Kollision mit einem nachfolgenden Fahrzeug zu verringern. Zum Zweck solcher aktiven Steuerungsaufgaben leitet das Fahrerassistenzsystem aus den Bilddaten abgeleitete Steuersignale an andere Fahrzeugsysteme, wie etwa an das Beleuchtungssystem, das Gurtstraffsystem oder das Bremssystem, weiter. Dafür kann das Fahrerassistenzsystem an das Fahrzeugbussystem angeschlossen werden zum Datenaustausch mit anderen Fahrzeugsteuereinheiten, Fahrzeugsensoren und Fahrzeugaktuatoren.

Es ist nun der Stand der Technik, dass auch die Fahrerassistenzsysteme eine Schnittstelle in Form eines Steckers aufweisen, über die das Fahrerassistenzsystem und insbesondere die in ihm integrierte Steuereinheit programmiert werden.

Ein wesentlicher Nachteil der Programmierung von Steuereinheiten, Fahrerassistenzsystemen, oder anderer programmierbarer Geräte über eine Steckverbindung ist es, dass dazu Kabel, Gegenstecker, ein Datenerfassungseinheit sowie möglicherweise weitere Recheneinheiten benötigt werden. Außerdem ist ein solches Programmierverfahren in der Regel nur von einem Fachmann durchführbar. Dies ist insbesondere deswegen problematisch, da aufgrund der Komplexität und wegen der großen Anzahl verschiedenartiger Steuerungsprozesse innerhalb eines modernen Fahrzeugs ein solches Verfahren meistens nicht nur einmalig während der Produktion vorgenommen werden muss, sondern beispielsweise auch zu Probeläufen oder bei späteren Reparaturen sowie innerhalb regelmäßiger Wartungsprozesse.

Dabei müssen beispielsweise bestehende Programmteile aktualisiert, gesperrt oder entsperrt werden. Es kann auch erforderlich sein, eine bestehende Programmierung neu zu konfigurieren, zu modifizieren oder teilweise oder vollständig zu erneuern. Des weiteren sind Änderungen in der Programmierung einer Steuereinheit notwendig, wenn nachträglich und/oder zeitweise Freischaltungen einzelner Steuerfunktionen des Fahrzeugs durch einen Hersteller, eine Servicewerkstatt oder einen Fahrzeugbesitzer realisiert werden sollen. Die aus dem Stand der Technik bekannte Programmierung von Steuereinheiten über eine Steckverbindung ist in jedem dieser Fälle zeitaufwendig, da hierzu etwa eine Servicewerksatt aufgesucht werden muss, und verursacht darüber hinaus Kosten, da zusätzliche Hardware und ein Fachmann für die Durchführung erforderlich ist.

Der vorliegenden Erfindung liegt also die Aufgabe zugrunde, eine Vorrichtung und ein Verfahren vorzuschlagen, welche die beschriebenen Nachteile zu beheben helfen. Die Erfindung soll also eine möglichst schnell und einfach durchführbare Programmierung von Steuereinheiten ermöglichen, ohne dass dazu zusätzliche, der Erfassung und Übertragung von Datensätzen dienende Vorrichtungen angeschlossen werden müssen. Außerdem soll die Programmierung durch einen Anwender ohne spezielle Vorkenntnisse durchgeführt werden können.

Diese Aufgabe wird erfindungsgemäß gelöst durch eine Vorrichtung mit den kennzeichnenden Merkmalen des Hauptanspruchs in Verbindung mit den Merkmalen des Oberbegriffs des Hauptanspruchs sowie durch ein Verfahren mit den Merkmalen des Nebenanspruchs. Vorteilhafte Ausgestaltungen und Weiterentwicklungen ergeben sich mit den Merkmalen der abhängigen Ansprüche.

Die erfindungsgemäße Vorrichtung zum Programmieren mindestens einer Steuereinheit weist neben der mindestens einen Steuereinheit eine Erfassungseinheit zum Erfassen von Datensätzen auf und ist eingerichtet zum Programmieren der Steuereinheit in Abhängigkeit von den erfassten Datensätzen. Weiterhin
- ist die Erfassungseinheit durch eine Kamera zum Erzeugen von Bilddaten aus einem erfassten Bild gegeben,
- weist die Vorrichtung eine zum Datenaustausch mit der Kamera verbundene Recheneinheit auf und ist zum Übertragen von Bilddaten mindestens eines von der Kamera erfassten Bildes auf die Recheneinheit eingerichtet,
- ist die Recheneinheit eingerichtet zum Erfassen der Bilddaten mindestens eines von der Kamera erfassten Bildes und zum Erkennen von in den erfassten Bilddaten enthaltenen, zu Datenbildern gehörigen Bilddaten, wobei die Datenbilder die Datensätze in kodierter Form enthalten, und zum Wiederherstellen der Datensätze aus den Bilddaten der Datenbilder gemäß einer Dekodierungsvorschrift und
- ist die Vorrichtung eingerichtet zum Übertragen der Datensätze von der Recheneinheit auf die Steuereinheit zu deren Programmierung.

Hierbei bezeichnet der Begriff des Bildes alle Bildpunkte, die die Kamera bei der Durchführung einer einzelnen Aufnahme erfasst. Ein Datenbild ist als die Abbildung einer bildförmigen Kodierung von Datensätzen definiert.

Dementsprechend sieht das hier vorgeschlagene und mit dieser Vorrichtung durchführbare Verfahren vor, dass eine Programmierung einer Steuereinheit in Abhängigkeit von Datensätzen erfolgt, welche in mindestens einem Datenbild kodiert sind. Weiterhin sieht das Verfahren vor
- Erfassen mindestens eines Bildes mit einer Kamera zum Erzeugen von Bilddaten, wobei das Bild mindestens ein Datenbild enthält,
- Übertragen der Bilddaten auf eine Recheneinheit,
- Erkennen der zu dem mindestens einen Datenbild gehörigen Bilddaten aus den von der Recheneinheit erfassten Bilddaten mittels eines auf der Recheneinheit installierten Bildverarbeitungsprogramms,
- Wiederherstellen der Datensätze durch Dekodieren der zu dem mindestens einen Datenbild gehörigen Bilddaten gemäß einer auf der Recheneinheit eingerichteten Dekodierungsvorschrift und
- Weiterleitung der Datensätze an die Steuereinheit zu ihrer Programmierung.

Die kennzeichnenden Merkmale der gattungsgemäßen Vorrichtung sind geeignet, die Programmierung der mindestens einen in der Vorrichtung enthaltenen Steuereinheit durchzuführen, ohne dabei die der Programmierung dienenden Datensätze über Kabel auf die Vorrichtung übertragen zu müssen. Entsprechend sind die Schritte des erfindungsgemäßen Verfahrens geeignet, die Programmierung einer Steuereinheit vorzunehmen, ohne dabei die Datensätze über einen als Stecker ausgebildete Programmierschnittstelle übertragen zu müssen. Die Steuereinheit wird vielmehr durch die in beschriebener Weise durch eine Kamera erfassten und an die Steuereinheit weitergeleiteten Datensätze programmiert, sei es zwecks einer erstmaligen Einrichtung, sei es zu einer Umprogrammierung.

Die Erfindung ermöglicht eine Übertragung bildförmig kodierter Datensätze auf mindestens eine Steuereinheit mittels einer Kamera und die Programmierung der Steuereinheit gemäß dieser Datensätze. Dies ist insbesondere im Fall von kamerabasierten Fahrerassistenzsystemen vorteilhaft, da bei solchen das bereits vorhandene Kamerasystem die Aufgabe der Datenerfassung übernehmen kann. Auf diese Weise entfällt die Notwendigkeit eines Anschlusses einer Dateneingabevorrichtung über ein Kabel und eine steckerförmige Programmierschnittstelle. Dies erlaubt eine schnelle und unkomplizierte Programmierung der betreffenden Steuereinheit etwa durch den Hersteller, eine Werkstatt oder auch den Fahrzeugbesitzer im Falle eines Fahrerassistenzsystems, ohne dass spezielle Vorkenntnisse oder zusätzliche Vorrichtungen erforderlich sind. Durch die Programmierung kann beispielsweise das nachträgliche oder zeitweise Freischalten von Steuerfunktionen, wie etwa Fahrerassistenzfunktionen, sowie auch umfangreichere Änderungen oder eine vollständige Neuprogrammierung einer Steuereinheit vorgenommen werden. Die betreffenden bildförmig kodierten Datensätze, welche z.B. Daten wie Freischaltungscodes, Kommandos oder Programmbefehle beinhalten, können bequem per Post, Telefax, Email oder auf eine andere Weise verschickt werden.

Die Erfindung beruht somit auf dem Gedanken, die zur Einrichtung des Steuerungsprogramms notwendigen Datensätze gemäß einer Kodierungsvorschrift in Bildform zu kodieren und als Programmierschnittstelle eine zur Bilderfassung geeignete Kamera und eine mit einem Bildverarbeitungsprogramm ausgestattete Recheneinheit zu verwenden, in welcher neben Bilderkennungsfunktionen zusätzlich eine zu der Kodierungsvorschrift gehörige Dekodierungsvorschrift eingerichtet ist, mit der aus den zu den Datenbildern gehörigen Bilddaten die in den Datenbildern kodierten Datensätze wieder hergestellt und an die Steuereinheit weitergeleitet werden können werden können.

Ausführungsbeispiele der Vorrichtung und des Verfahrens werden nachfolgend anhand der Figuren 1 bis 3 beschrieben. Es zeigen
- Fig. 1: eine schematisch dargestellte Vorrichtung mit einer ersten und einer zweiten Steuer- einheit, wobei die erste Steuereinheit mit einer Recheneinheit in einem Fahrerassis- tenzsystem integriert und über ein Fahr- zeugbussystem an das zweite Steuergerät, an Fahrzeugsensoren und Fahrzeugaktuatoren an- geschlossen ist,
- Fig. 2: eine schematisch dargestellte Vorrichtung in einer Ausführungsform wie in Fig. 1 dar- gestellt, mit einer Kamera, die in einem Rückspiegel an einer Windschutzscheibe ei- nes Fahrzeuges integriert ist und
- Fig. 3: ein Flussdiagramm, das einen Verlauf eines Verfahrens veranschaulicht.

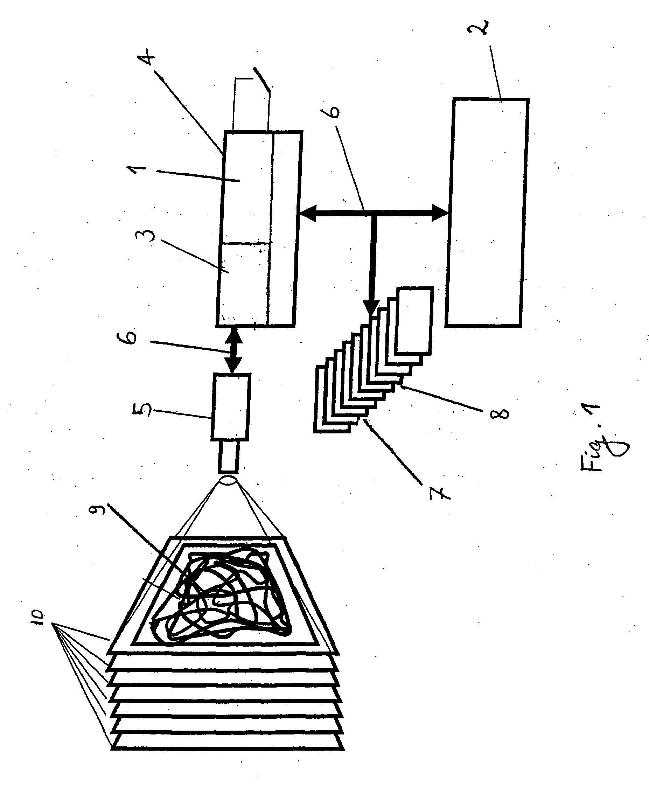

In Fig. 1 ist ein Beispiel für eine Vorrichtung hier vorgeschlagener Art schematisch dargestellt. Die Vorrichtung beinhaltet eine erste und eine zweite Steuereinheit 1, 2, wobei die erste Steuereinheit 1 mit einer Recheneinheit 3 in einem Fahrerassistenzsystem 4 integriert sind. Allerdings ist es ebenfalls möglich, die Recheneinheit 3 in die erste Steuereinheit 1 zu integrieren. Desweiteren beinhaltet die Vorrichtung eine Kamera 5. In dieser Vorrichtung ist die Verbindung des Fahrerassistenzsystems mit der zweiten Steuereinheit 2 und der Kamera 5 vorteilhafterweise über ein Fahrzeugbussystem 6 hergestellt. An das Fahrzeugbussystem sind außerdem Fahrzeugsensoren 7 und Fahrzeugaktuatoren 8 angeschlossen, so dass auf diese Weise ein Datenaustausch zwischen der Kamera 5, den Fahrzeugsensoren 7, den Fahrzeugaktuatoren 8, dem Fahrerassistenzsystem 4, der Recheneinheit 3 und der ersten und der zweiten Steuereinheit 1, 2 ermöglicht ist. Auf diese Weise können Messwerte verschiedener Fahrzeugsensoren sowie Bildinformationen von verschiedenen Steuereinheiten gleichzeitig verwendet werden. Außerdem kann die Übertragung von Datensätzen, die zur Programmierung der zweiten oder einer anderen Steuereinheit bestimmt sind, von der Recheneinheit 3 über das Bussystem auf sie übertragen werden.

Wie aus Fig. 1 zu erkennen ist, sind weiterhin Bildtafeln 10 vorgesehen, auf denen Datenbilder 9 abgebildet sind, die kodierte Datensätze enthalten. Diese Bildtafeln 10 werden so positioniert, dass sie von der Kamera 5 jeweils in einem Bild erfasst werden können zur Erzeugung von Bilddaten.

Die Recheneinheit 3 ist zur Speicherung der Bilddaten von durch die Kamera 5 erfasster Bilder eingerichtet. Auf der Recheneinheit 3 ist ein Bildverarbeitungsprogramm mit Bilderkennungsfunktionen eingerichtet zum Erkennen von Datenbildern 9 mit z.B. Strichcodes, Data Matrix Codes und verschlüsselten Piktogrammen aus den Bilddaten. Ferner ist die Recheneinheit 3 eingerichtet zum Wiederherstellen der Datensätze aus den Bilddaten der erkannten Datenbilder 9 gemäß einer Dekodierungsvorschrift, die der Kodierungsvorschrift der kodierten Datensätze entspricht. Schließlich ist die Recheneinheit 3 eingerichtet, um aus den Datensätzen zu erkennen, für welche der beiden Steuereinheiten 1, 2 sie bestimmt sind, und um die Datensätze anschließend auf die entsprechende Steuereinheit zu übertragen. Die Steuereinheiten 1, 2 weisen jeweils Speicherelemente zur Speicherung solcher Datensätze, eine Verarbeitungseinheit zum Erkennen ihrer Vollständigkeit und zum automatischen Abarbeiten der auf der jeweiligen Steuereinheit gespeicherten Datensätze zur Durchführung der Programmierung auf. Dabei wird unter Programmierung der betreffenden Steuereinheit 1, 2 verstanden, dass eine oder mehrere Steuerfunktionen und/oder Programmteile freigeschaltet, geperrt, konfiguriert, geändert, gelöscht oder neu erstellt werden. Zu diesem Zweck werden mit den Datensätzen auf die jeweilige Steuereinheit Daten, Kommandos, Programmbefehle oder anderen zum Programmieren der Steuereinheit 1, 2 geeignete Anweisungen übertragen.

Desweiteren ist die Recheneinheit 3 eingerichtet zur Erkennung eines in einem Datenbild enthaltenen Aktivierungscodes und Beendigungscodes zum darauf folgenden Starten bzw. Beendigen eines Verfahrens zum Programmieren der Steuereinheiten gemäß durch die Kamera erfassbarer Datensätze.

Ferner erstellt das auf der Recheneinheit 3 installierte Bildverarbeitungsprogramm eine Auswertung der Bilddaten und sind die Steuereinheiten 1, 2 programmiert zur Steuerung von Fahrzeugaktuatoren 8 unter Verwendung dieser Auswertung und weiterer Messdaten, welche von den Sensoren 7 erzeugt werden.

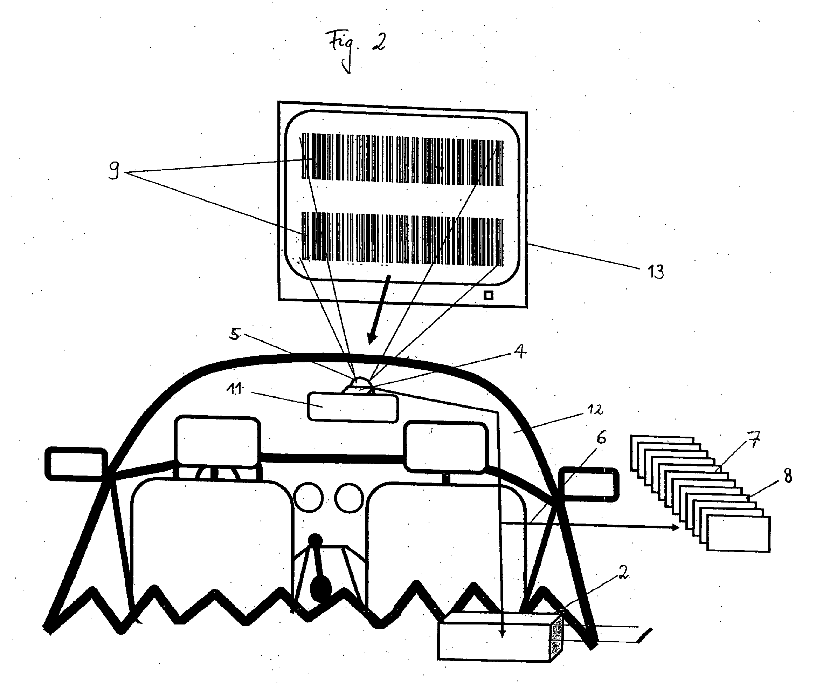

In Fig. 2 ist eine Realisierung der erfindungsgemäßen Vorrichtung in einem Fahrzeug dargestellt. In dieser Ausführungsform sind eine Kamera 5, welche als Monokamera oder als Stereokamera ausgebildet ist, aber auch mehrere Kameraeinheiten enthalten kann, und ein Fahrerassistenzsystem 4 der Vorrichtung in einem Rückspiegel 11 an einer Windschutzscheibe 12 eines Fahrzeuges integriert, mit denen Bilder der Umgebung vor dem Fahrzeug erfasst und angezeigt oder verarbeitet werden.

Vor dem Fahrzeug ist ein Bildschirm 13 angeordnet, auf den ein Film projiziert wird, der eine Abfolge von Datenbildern 9 mit Datensätzen mit vorgegebenen zeitlichen Abständen beinhaltet, wobei die Datensätze in den Datenbildern in Form von Strichcodes, Datenmatrizen, verschlüsselten Piktogrammen und in einer Kombination dieser Kodierungen dargestellt werden.

Alternativ können die Datenbilder 9 auch durch eine Abfolge von Bildtafeln, durch Projektion einer Abfolge von Dia-Aufnahmen oder ähnlichem auf den Bildschirm 13 abgebildet werden. In den Datenbildern 9 sind Datensätze zur Programmierung der in dem Fahrerassistenzsystem 4 enthaltenen ersten Steuereinheit und der zweiten Steuereinheit 2 enthalten, wobei beispielsweise in der ersten Steuereinheit eine Steuerfunktion durch einen Freischaltungscode freigeschaltet, eine weitere Steuerfunktion neu konfiguriert und die zweite Steuereinheit vollständig neu programmiert werden sollen.

Die Datenbilder können per Post, Fax oder über das Internet als Anhang einer Email verschickt werden und dabei in elektronischer Form, auf einem Datenspeicher wie einer CD oder DVD, oder auf Papier oder ähnlichem gedruckt sein.

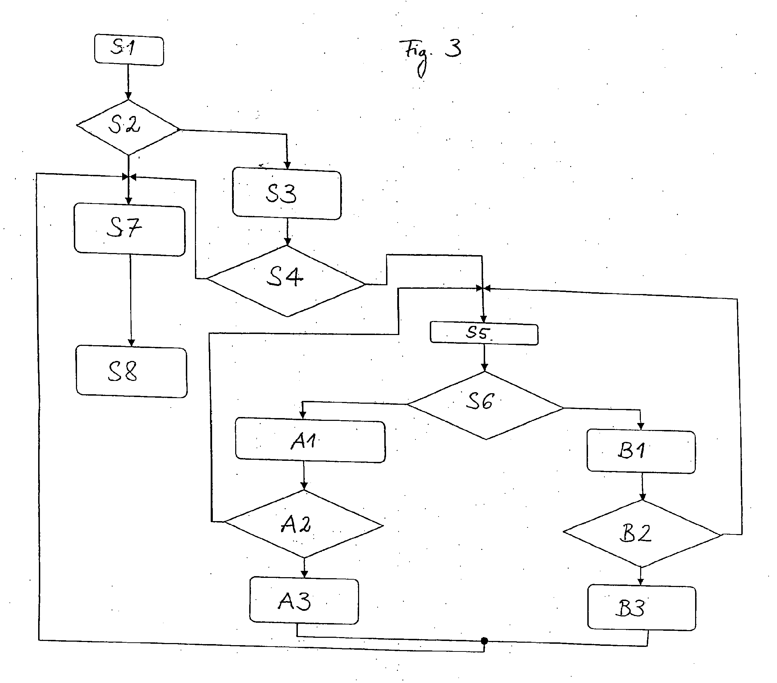

In Fig. 3 ist eine mögliche Ausführungsform des erfindungsgemäßen Verfahrens als Flussdiagramm dargestellt. Diese beispielhafte Ausführungsform des Verfahrens lässt sich durch die anhand Fig. 1 und Fig. 2 beschriebenen Ausführungsformen der Vorrichtung durchführen. Durch das Verfahren wird eine von zwei in einem Fahrzeug enthaltenen Steuereinheiten anhand der in den Datenbildern kodierten Datensätze programmiert.

In dem beschriebenen Verfahren wird für die Kamera des Fahrzeugs erfassbar eine zeitliche Abfolge von Datenbildern abgebildet, etwa durch Abspielen eines Filmes auf einem im Sichtfeld der Kamera positionierten Bildschirm. Dabei wird mit dem ersten Datenbild ein Aktivierungscode und mit dem letzten Datenbild ein Ende-Code abgebildet.

Vor einem Beginn des eigentlichen Verfahrens wird die Vorrichtung gemäß Schritt S1 zunächst eingeschaltet. In einem anschließenden Verfahrensschritt S2 wird die Vorrichtung durch Abbilden des Aktivierungscodes im Sichtfeld der Kamera in einen Datenerfassungsmodus (Schritt S3) gebracht, falls ein Vergleich einer das Fahrzeug, in dem die Kamera angeordnet ist, identifizierenden Information mit einer in dem Aktivierungscode enthaltenen Information positiv ausfällt. Alternativ kann der Datenerfassungsmodus auch beispielsweise über eine Menüführung in einer Anwenderschnittstelle eines Fahrerassistenzsystems eingeleitet werden. In dem Erfassungsmodus (S3) wird im Sichtfeld der Kamera eine zeitliche Abfolge der Datenbilder abgespielt. Dabei werden die durch die Kamera erfassten Bilder in Bilddaten umgewandelt und an die Recheneinheit weitergeleitet und in ihr abgespeichert. In den gespeicherten Bilddaten werden in der Recheneinheit anhand einer Bilderkennungsfunktion solche Bilddaten gesucht, die zu Datenbildern gehören, welche anhand einer vorgegebenen Kodierungsvorschrift erzeugt wurden. Im folgenden Verfahrensschritt S4 wird festgestellt, ob unter den in der Recheneinheit gespeicherten Bilddaten zu Datenbildern gehörige Bilddaten gefunden werden konnten.

Falls dies der Fall ist, werden in einem nächsten Verfahrensschritt S5 zunächst die zum ersten gespeicherten Datenbild gehörigen Datensätze über die in der Recheneinheit programmierte Dekodierungsvorschrift wieder hergestellt. Im folgenden Schritt S6 wird anhand der Datensätze des dekodierten Datenbildes entschieden, für welches Steuergerät die Datensätze bestimmt sind. Sind diese Datensätze für die erste Steuereinheit bestimmt, werden die Schritte A1 und A2 durchgeführt. Sind diese Datensätze für die zweite Steuereinheit bestimmt, werden die Schritte B1 und B2 durchgeführt. Im Schritt A1 bzw. B1 werden die Datensätze an die erste bzw. zweite Steuereinheit weitergeleitet und in ihr gespeichert. Die in den betreffenden Steuereinheiten gespeicherten Datensätze werden im Schritt A2 bzw. B2 durch die Steuereinheit auf einen Ende-Code hin durchsucht. Wird ein solcher Ende-Code nicht gefunden, wird das nächste erfasste Datenbild gemäß der Schritte S5, S6 und A1 bzw. B1 und A2 bzw. B2 verarbeitet. Die Schritte S5, S6 und A1 bzw. B1 und A2 bzw. B2 wiederholen sich für die gespeicherten Datenbilder solange, bis das Datenbild erreicht wird, welches den Ende-Code beinhaltet. Dann wird in dem Schritt A3 bzw. B3 die Programmierung der ersten bzw. zweiten Steuereinheit von der betreffenden Steuereinheit automatisiert abgearbeitet. Im folgenden Schritt S7 wird dem Fahrerassistenzsystem signalisiert, dass keine weitere Programmierung durchgeführt wird, so dass dann das Verfahren beendet wird (Schritt S8). Diese letzten beiden Schritte S7 und S8 werden auch dann durchgeführt, falls im vorangehenden Schritt S4 der Fall festgestellt wird, dass im Schritt S3 in den Bilddaten keine Datenbilder identifiziert werden konnten. Die Schritte S7 und S8 werden auch dann eingeleitet, wenn im Schritt S2 der Vergleich zwischen der das Fahrzeug identifizierenden Information und der entsprechenden Information in dem Aktivierungscode nicht positiv ausgefallen ist.

## Patentansprüche

1. Vorrichtung zum Programmieren mindestens einer Steuereinheit (1, 2), wobei die Vorrichtung neben der mindestens einen Steuereinheit (1, 2) eine Erfassungseinheit (5) zum Erfassen von Datensätzen aufweist und wobei die Vorrichtung eingerichtet ist zum Programmieren der Steuereinheit (1, 2) in Abhängigkeit von den erfassten Datensätzen,
**dadurch gekennzeichnet, dass**
- die Erfassungseinheit durch eine Kamera (5) zum Erzeugen von Bilddaten aus einem erfassten Bild gegeben ist,
- die Vorrichtung eine zum Datenaustausch mit der Kamera (5) verbundene Recheneinheit (3) aufweist und eingerichtet ist zum Übertragen von Bilddaten mindestens eines von der Kamera (5) erfassten Bildes auf die Recheneinheit (3),
- die Recheneinheit (3) eingerichtet ist zum Erfassen der Bilddaten mindestens eines von der Kamera (5) erfassten Bildes und zum Erkennen von in den erfassten Bilddaten enthaltenen, zu Datenbildern (9) gehörigen Bilddaten, wobei die Datenbilder (9) die Datensätze in kodierter Form enthalten, und zum Wiederherstellen der Datensätze aus den Bilddaten der Datenbilder (9) gemäß einer Dekodierungsvorschrift, und
- die Vorrichtung eingerichtet ist zum Übertragen der Datensätze von der Recheneinheit (3) auf die Steuereinheit (1, 2) zu deren Programmierung.

2. Vorrichtung nach Anspruch 1, **dadurch gekennzeichnet, dass** die Recheneinheit (3) und die Steuereinheit (1, 2) verbunden sind zum Datenaustausch, wobei auf der Recheneinheit (3) ein Bildverarbeitungsprogramm installiert ist zum Erstellen einer Auswertung der Bilddaten und die Steuereinheit (1, 2) programmiert ist zur Steuerung von an die Steuereinheit (1, 2) angeschlossenen Geräten unter Verwendung der Auswertung der Bilddaten.

3. Vorrichtung nach einem der Ansprüche 1 oder 2, **dadurch gekennzeichnet, dass** die Recheneinheit (3) eingerichtet ist zum Erkennen von Datenbildern (9) mit Strichcodes, Data Matrix Codes, verschlüsselten Piktogrammen und/oder mit anders bildförmig kodierten Datensätzen.

4. Vorrichtung nach einem der Ansprüche 1 bis 3,
**dadurch gekennzeichnet, dass** die Recheneinheit (3) und/oder die Steuereinheit (1, 2) in einem Fahrerassistenzsystem (4) eines Fahrzeugs integriert sind.

5. Vorrichtung nach einem der Ansprüche 1 bis 4,
**dadurch gekennzeichnet, dass** die Vorrichtung durch ein Bussystem mit weiteren Steuereinheiten, Sensoren und/oder Aktuatoren verbunden ist.

6. Vorrichtung nach einem der Ansprüche 1 bis 5,
**dadurch gekennzeichnet, dass** die Kamera (5) eine Monokamera oder eine Stereokamera ist.

7. Verfahren zum Programmieren einer Steuereinheit (1, 2) in Abhängigkeit von Datensätzen, wobei die Datensätze in mindestens einem Datenbild (9) kodiert sind, mit folgenden Schritten:
- Erfassen mindestens eines Bildes mit einer Kamera (5) zum Erzeugen von Bilddaten, wobei das Bild mindestens ein Datenbild (9) enthält,
- Übertragen der Bilddaten auf eine Recheneinheit (3),
- Erkennen der zu dem mindestens einen Datenbild (9) gehörigen Bilddaten aus den von der Recheneinheit (3) erfassten Bilddaten mittels eines auf der Recheneinheit (3) installierten Bildverarbeitungsprogramms,
- Wiederherstellen der Datensätze durch Dekodieren der zu dem mindestens einen Datenbild (9) gehörigen Bilddaten gemäß einer auf der Recheneinheit (3) eingerichteten Dekodierungsvorschrift und
- Weiterleitung der Datensätze an die Steuereinheit (1, 2) zu ihrer Programmierung.

8. Verfahren nach Anspruch 7, **dadurch gekennzeichnet, dass** das mindestens eine Datenbild (9) auf mindestens einer Bildtafel (10), durch mindestens eine Projektion auf einer Projektionsfläche, durch Abspielen eines Filmes auf einem Bildschirm (13) oder in einer anderen für die Kamera (5) erfassbaren Form abgebildet wird.

9. Verfahren nach einem der Ansprüche 7 oder 8, **dadurch gekennzeichnet, dass** die Datensätze in Form von Strichcodes, Data Matrix Codes, verschlüsselten Piktogrammen und/oder in einer anderen bildförmigen Kodierung oder in einer Kombination verschiedener Kodierungen dargestellt werden.

10. Verfahren nach einem der Ansprüche 7 bis 9, **dadurch gekennzeichnet, dass** das Verfahren durch einen in einem Datenbild (9) enthaltenen Aktivierungscode gestartet und/oder durch einen in einem Datenbild (9) enthaltenen Deaktivierungscode beendet wird.

11. Verfahren nach einem der Ansprüche 7 bis 10, **dadurch gekennzeichnet, dass** durch die Datensätze Daten, Kommandos, Programmbefehle oder andere zum Programmieren der Steuereinheit (1, 2) geeignete Anweisungen auf die Steuereinheit (1, 2) übertragen werden.

12. Verfahren nach einem der Ansprüche 7 bis 11, **dadurch gekennzeichnet, dass** in der Steuereinheit (1, 2) durch die Datensätze mindestens eine Steuerfunktion, mindestens ein Programmteil oder eine Programmierung freigeschaltet, gesperrt, konfiguriert, geändert, gelöscht oder neu erstellt wird.

13. Verfahren nach Anspruch 12, **dadurch gekennzeichnet, dass** die Steuerfunktion, der Programmteil oder die Programmierung erst dann freigeschaltet, gesperrt, konfiguriert, geändert, gelöscht oder neu erstellt wird, wenn ein Vergleich einer ein Fahrzeug, in dem die Kamera angeordnet ist, identifizierenden Information mit einer in den Datensätzen enthaltenen Information positiv ausfällt.

14. Verfahren nach einem der Ansprüche 7 bis 13, **dadurch gekennzeichnet, dass** das Verfahren mit einer Vorrichtung nach einem der Ansprüche 1 bis 6 durchgeführt wird.
